# EUROPEAN PATENT SPECIFICATION

(11) **EP 2 686 260 B1**
(45) Date of publication and mention of the grant of the patent: **18.05.2016**
(21) Application number: 12708356.6
(22) Date of filing: 14.03.2012
(51) Int. Cl.: B65G 69/16, B65B 5/10

(54) **METHOD AND EQUIPMENT FOR FILLING A CONTAINER WITH A MOVABLE INTERMEDIATE TEMPORARY BOTTOM**
VERFAHREN UND VORRICHTUNG ZUM FÜLLEN EINES BEHÄLTERS MIT BEWEGLICHEM TEMPORÄREM ZWISCHENBODEN
PROCÉDÉ ET EQUIPEMENT POUR REMPLIR UN RÉCIPIENT AVEC UN FOND INTERMÉDIAIRE TEMPORAIRE MOBILE

(30) Priority: 14.03.2011 FR 1152045
(43) Date of publication of application: 22.01.2014
(73) Proprietor: Fives Intralogistics S.p.A., 21015 Lonate Pozzolo (VA) (IT)
(72) Inventor: SOLDAVINI, Attilio, Ferno (VA) (IT); LAVELLI, Sergio, I-21010 Arsago Seprio (VA) (IT); MACCHI, Riccardo, I-21010 Samarate (IT); SCAUZZO TARAGNINO, Jacopo, I-20013 Magenta (IT)
(74) Representative: Blot, Philippe Robert Emile
(86) International application number: PCT/EP2012/054496
(87) International publication number: WO 2012/123513

(56) References cited:
- EP-A1- 0 002 875
- EP-A1- 0 042 199

## Description

In postal centres, cages or "roller cages" are widely used to carry packets and parcels because of easy handling and loading and unloading from trucks.

Common practice is manually loading packets and parcels into roller cages for delivery, but there are many examples where packets and parcels are sorted directly into roller cages by automatic sorting machines as cross belt or tilt tray.

The roller cages dimensions are generally around 1000x1000 mm for the base, while height is about 1600-1800 mm. Direct sorting has to face possible parcel damages due to falling height.

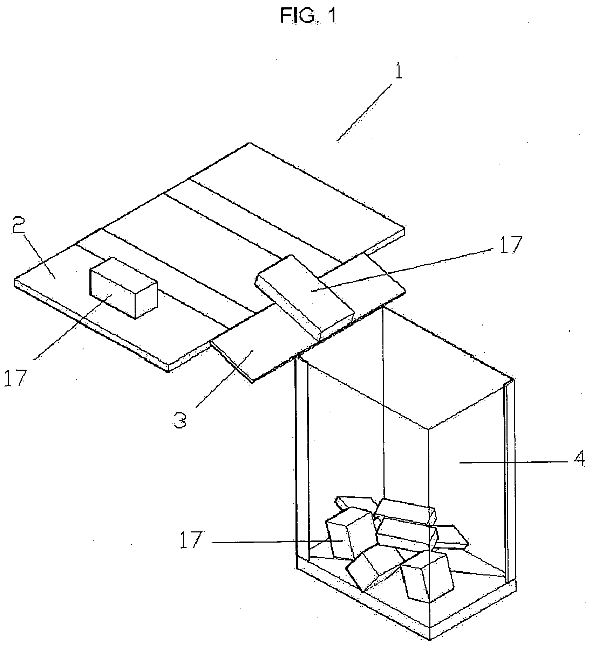

The roller cages easily fit with the sorting machine. They need to be in fixed positions in respect to the sorter, and this can be easily achieved with centering and blocking guides on the floor. Fig. 1 shows a part of a cross belt sorter 1. Cross belt units 2 can accelerate laterally parcels 17 in both directions, in order to send parcels to their destination roller cages 4 through a narrow sliding interface 3. Sorting directly into roller cages is of great general interest because it can offer several advantages: more than 70% of the total postal parcels flow is usually made of small and light packets which can be easily sorted into cages without problems. There is no need of repetitive movements of the operators to lift and deposit; the sorter capacity is not limited and there is no need of accumulation chutes for operators. Also, efficiency in filling the roller cage volume is generally acceptable, thanks to very large presence of small packets.

But direct sorting into roller cages, in spite of great advantages that can be achieved, is not yet widely accepted because of possible damages to parcels falling into the roller cage, particularly due to presence into the postal parcel flow of heavy parcels. It would be too costly and complex to separate heavy parcels from light packets within the parcel flow, therefore sorting into cages implies that parcels can get kinetic energy during falling sufficient to damage itself or to damage packets already stacked on the cage bottom.

There are already several solutions adopted by postal organizations to sort directly into roller cage reducing the damage rate. All the solutions are directed to reduce falling height by adding to the roller cage a temporary bottom or an intermediary bottom supported by elastic means in such a way that it is progressively lowered by weight of the sorted parcels.

These solutions are not fully satisfactory: special roller cages with mobile bottom spring loaded or other devices are requested, and performance in damage rate reduction versus filling efficiency is limited by the fact that no active control is possible.

Another solution is disclosed in the patent application JP 2002 284344. It is based on the application of a fabric belt suspended between two motorized wrapping rollers parallel to the sorting machine direction. It discloses a conveyor to transfer a group of fragile packets into a plastic tray. The tray is at the loading zone, at the end of the conveyor. The loading zone is equipped with a device that prevents fragile packets from falling directly inside the tray. In front of the conveyor is installed the belt with a window, being suspended by two rollers driven by independent motors, and guided by take-away rollers in such a way that the belt window is exactly in front of the conveyor, letting free passage to parcel, while the remaining part of the belt forms a covering over the tray to collect packets passing through the window. When the last packet of the group has over passed the window, the belt can be lowered to the tray bottom and then the belt can be released by wrapping it on the higher roller.

This solution also is not fully satisfactory, especially because as the belt opening is on the direction of the parcel sorting trajectory, some parcels can touch the belt and be blocked.

Document EP 0 002 875 A1 discloses a method according to the preamble of claim 1. In this document, the intermediate bottom is lowered and controlled via photocells detecting parcels already loaded in the container.

The present invention provides a solution for direct sorting of parcels into roller cages, without the above mentioned constraints and problems, i.e. Optimising the filling of the cages (better ratio filling perfomance/damages to articles.

The invention is firstly a method according to claim 1.

The intermediate bottom can be progressively lowered to facilitate the optimal filling of the roller cage, the lowering being controlled using level information by a sensor or other means.

Few different technical implementations of this method are disclosed hereafter.

The programmable logic controller (PLC) of the sorter determines the operation of each of the equipment according to the disclosed method. Information useful for the control system is particularly volume and weight of each sorted item and status of few reflex photocells equipped on the chute of the sorter that guides the sorted package to fall into the roller cage. The reflex photocells are able to detect if, at a certain distance, there is an obstacle, by measuring intensity of the light reflected by the obstacle. Two or more reflex photocells looking from the chute to the roller cage entry can form a light barrier which informs the control system when the heap of sorted parcel has reached a given threshold.

Information from reflex photocells is not accurate because it is dependent on the reflective characteristics of the parcels packing material, and the single photocell itself can detect an obstacle only along its light beam. However, reflex photocells are low cost and can be used in parallel to form a light barrier.

The light barrier is used by the control system mainly to avoid that the parcel heap becomes so high that it forms an obstacle to the sorting of the parcels, while operative decisions, as an example decisions to sort or not a very large parcel into a roller cage that is almost full, are taken by the control system, considering volume and weight of parcels already sorted into the roller cage and also of the parcels that are on the sorter and directed to that cage.

The invention is also an equipment to implement the method disclosed above.

According to the invention, the temporary intermediate bottom is supported by one or two thin supports structures perpendicular to the sorter direction, that are laying very close to the roller cage walls, in such a way that do not interfere with trajectory of sorted items.

The intermediate bottom has a minimum thickness in order to leave the maximum passage for sorted parcels. In addition, the equipment allows the removal of the temporary bottom, after accumulating the sorted parcels, without developing lifting forces acting on the parcels and capable of damaging parcels or the packaging of parcels.

The temporary bottom and the support structures, while being extracted from the heap of the sorted parcels, do not present discontinuities that could cause jam with parcels, and they are flexible and low friction to prevent damages to parcels or to their packaging material.

According to a first embodiment of the invention, the two supports structure are part of a belt.

In this case, the equipment includes actively controlled motorized wrapping rollers, fitted over a roller cage, positioned with their axis orthogonal to the sorter direction, capable of dropping into the roller cage a special belt, in order to create a temporary intermediate bottom to reduce falling height for the sorted items, to collect sorted items and to gently lowering the sorted items inside the roller cage, and then to remove the belt from the heap of sorted items to repeat a new cycle with the following set of sorted items up to complete filling of the roller cage, the belt width being close to the length of the roller cage, the belt having an open window with a length longer than the roller cage width and a width close to the belt width due to, at the opening, only a narrow strip of belt at each side of the belt in the widthwise.

According to a second embodiment of the invention, the support structure that supports temporary the intermediate bottom is part of a thin articulated structure.

In this case, the equipment includes a thin articulated structure that can be actively lowered inside an empty roller cage and then removed by lifting when the roller cage is full of sorted items, the structure is provided with features to easily slide on the roller cage wall when lifted, and with an hinged part that can be opened when actuated, for example by a pneumatic cushion or other means as small electrical actuators or cables transmitting forces remotely applied by an electrical motor, in order to create a temporary intermediate bottom to reduce falling height for the sorted items.

The thin articulated structure can be actively lowered inside the empty roller cage and then removed by lifting by using a wrapping motorized roller or other means.

The actuator that opens the hinged part is chosen so that that actuation will not cause increase in cross section of said structure and said hinged part.

The hinged part can be provided with a pneumatic cushion installed in the front edge, that, when actuated, causes pressure against the roller cage wall to firmly fix the intermediate bottom between the opposite cage walls.

The hinged part has a cross section lower than the articulated structure cross section, when it is not activated, in order to cause minimum resistance to equipment lifting when the roller cage is full.

The invention further relates to a method for sorting items into roller cages according to claim 1. Other features of the method are described in claims 2 to 11.

The invention also relates to an equipment according to claim 13. Other features of the equipment are described in claims 14 to 29.

Moreover, the invention relates to a method to control an equipment according to claim 30.

These new solutions are both directed to reduce kinetic energy of parcels without sacrificing the roller cage volume, without adding to the roller cage special devices or attached elastic parts or special pre dispositions.

The proposed solutions are based on actively controlled devices, which can be lowered inside the roller cage, to form an intermediate bottom that can be managed to reduce falling height for the parcels. Once the roller cage filling is completed, the device is stowed and does not interfere with handling of the full roller and replacing with an empty one.

The invention will be understood more clearly with reference to the appended figures, in which:
- Figure 1 is a perspective view of part of a cross belt sorter,
- Figures 2 to 6 are perspective views of an equipment according to a first embodiment of the invention,
- Figures 7 to 10 are perspective views of an equipment according to another embodiment of the invention,
- Figures 11 to 13 are perspective views of an equipment according to yet another embodiment of the invention,
- Figure 14 is a perspective view of an equipment comprising a chute according to an embodiment of the invention,
- Figure 15 illustrates in perspective a use of an equipment according to the invention, and
- Figure 16 illustrates in perspective a use of an equipment according to another embodiment.

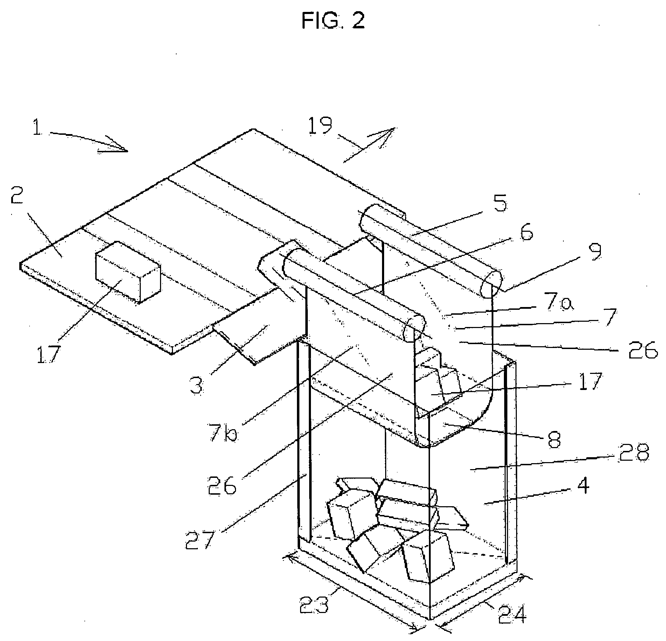

The first embodiment of the invention is shown in Fig. 2. Fig. 2 shows a part of a cross belt sorter 1. Cross belt units 2 can accelerate laterally parcels 17 in both directions, in order to send parcels to their destination roll cages 4 through a chute 3.

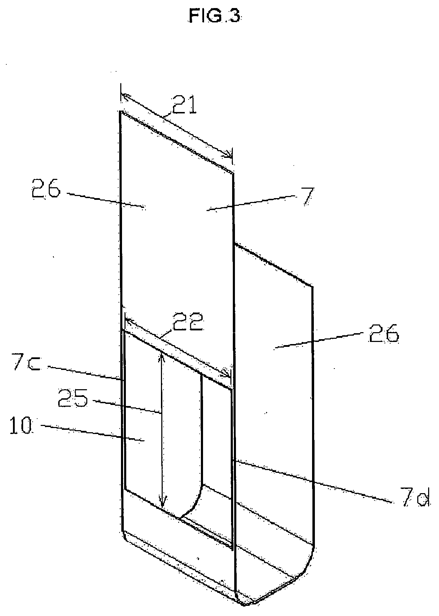

The first embodiment of the invention is based on the application of a fabric belt 7 suspended between two motorized wrapping rollers 5 and 6 over the roller cage 4. The belt 7 is provided with a squared opening 10 shown on Fig. 3 that can be used to lay down the collected parcels into the roller cage. The belt is first dropped into the roller cage forming a temporary bottom 8 to collect parcels that are sorted, providing for a limited falling height and some elasticity to reduce forces acting on falling parcels. Once the collected parcels reach a given threshold, the belt is lowered and then is wrapped on one roller while unwrapping on the other in such a way that the belt squared opening is found below the parcels. Then both rollers raise the belt which gets free from parcels and can be raised over the roller cage.

Differently from prior art described in JP 2002 284344, the present solution of the application is based on two wrapping rollers 5, 6 that are orthogonal to the sorting machine direction 19, in such a way that parcels 17 can enter sideway of the belt as shown in Fig 2. In this way, the belt opening has no relation with parcel sorting trajectory and does not interfere in any way on sorting of large parcels, since parcels do not cross the belt window as it would be using the solution described in the prior art. Since parcels are loaded cross-wise on the sorter, and therefore are sorted with the longer side orthogonal to the sorter direction, even the larger parcels can enter into the roller cage. The vertical movable walls 7a, 7b formed by the suspended belt 7 between rollers 5, 6 orthogonal to the sorter direction 19 will guide better the large parcels to enter into the roller cages even in case the sorting trajectory causes the parcel to hit the roller cage upper borders. The wrapping rollers 5, 6 are also both installed at a higher level over the roller cage in such a way that it is possible to fully raise the belt over the sorter level, leaving a completely free access to the roller cage for manual handling of the roller cage.

The belt unit 7 according to the invention is shown in detail in Fig. 3. It is a conventional fabric belt for conveyors, with high transversal rigidity, provided with two narrow strips of belt 7c, 7d, reinforced with side profiles, at the sides of an opening window 10 whose length 25 is larger than the roller cage width 24. The belt has a width 21.

The belt 7 can be provided with metal spots which code positions that can be detected by proximity sensors in order to let the control system position of the belt as necessary, with sufficient precision even using low cost solutions as AC gear-motor with solid state switch for bidirectional activation.

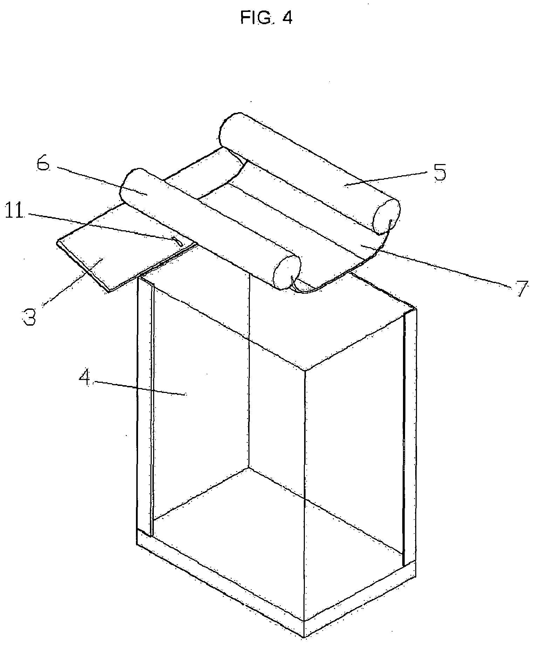

Fig. 4 shows how the filling cycle begins: the belt unit 7 is fully wrapped by the wrapping rollers 5 and 6 and does not obstacle checking by the reflex photocells, one being shown by the slot 11 in chute 3, which are used to verify room available inside the roller cage.

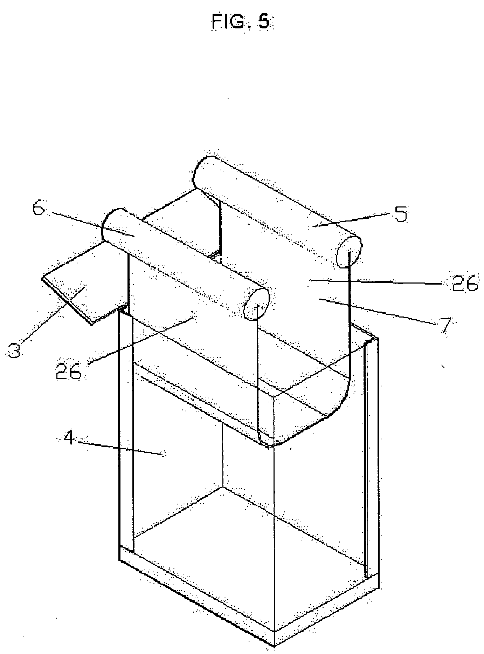

After verification, the wrapping rollers 5 and 6 are driven to un-wrap the belt in order to form an intermediate bottom inside the roller cage, as shown in Fig. 5, with proper accumulation capacity, still providing for limited height falling and shock absorbing surface by the belt elasticity.

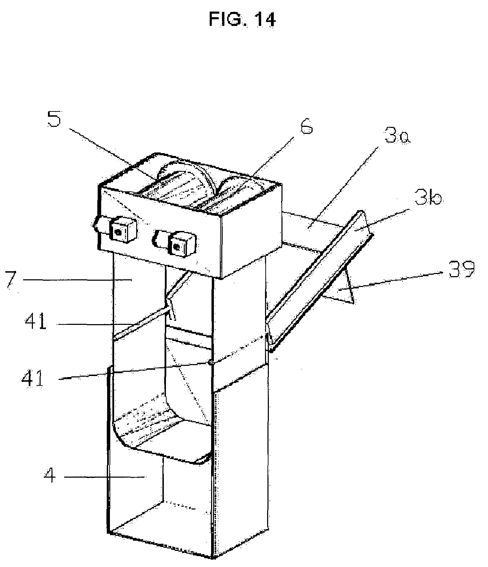

In order to leave a free passage for the parcels, it is advantageous to keep the two belt walls vertical and close to the roller cage, independently from disposition and weight of parcels already accumulated on the belt bottom. For this purpose, according to the invention, two arms 41 are inserted, as shown in figure 14. Figure 14 shows a preferred embodiment for the arms 41, wherein the chute 3 comprises a bottom 3a and two lateral shoulders 3b that direct parcels into the roller cage. The arms are formed by two extendable rods or rollers, housed in the shoulders 3b of the chute 3, that can be extended or fully retracted inside the shoulders on command by using actuators. The arms 41 are extended to let free passage during sorting and lowering of the belt bottom to accumulate parcels, as the accumulation quantity is reached, and before lowering and discharge, the arms are fully retracted.

Now sorting to the roller cage can be enabled: sorted packet and parcels accumulate over the intermediate bottom provided by the belt. After each sorted parcel, the control system checks the status of the reflex photocells to verify if there is still room for other. The way in which the control system takes decision to continue sorting to the cage, or to stop, could be conveniently more complex that simple reading of photocell. It can take in consideration also known volume and weight of the parcels already sorted and also of the parcels that are already on the sorter directed to that destination. As an example, when the intermediate accumulation is almost full, the control system can re-circulate on the sorter some large parcels directed to the cage while continuing sorting the small packets directed to the cage.

During lowering of the belt with accumulated parcels, the brakes on the motors of the belt rollers 5,6 are released and an approximate value of the weight of the accumulated parcels is determined by measuring the current values of the two motors. If the measured weight of the accumulated parcels exceeds a predetermined threshold, the parcels are discharged into the roller cage 4, as described below. This solution prevents excessive weight of accumulated parcels that can cause damage during unloading.

When the intermediate accumulation is full, sorting to that destination is suspended, the two arms 41 are retracted from the belt sides and both the wrapping rollers 6 and 5 rotate to lower the intermediate accumulation till they lay down over the bottom of the cage or over the heap of parcels that have been accumulated in previous cycles. In this way the new group of sorted parcels is lowered at low speed without damage.

To improve the roller cage filling quality and reduce possible parcel damage, it is advantageous to determine the position of the heap of the parcels already accumulated in the roller cage before discharging of a new quantity of parcels.

The level of accumulated parcels is measured by determining the vertical position of the belt bottom when it is laying over the accumulated parcels, as follows. Both the rollers 5, 6 that drive the belt 7 are equipped with sensors to let the control system measure their angular displacements. If wrapping of the belt on the rollers is maintained correct, by the measure of the rollers angular positions it is possible to get the vertical position of the belt bottom in respect to the roller cage.

Therefore it is possible to determine the approximate position of the heap of parcels already accumulated into the roller cage by recording the vertical position of the belt bottom when the weight, measured by the motor current values while lowering the belt bottom, has a significant decrease, indicating that the belt is laying over the accumulated parcels.

After determining the vertical position of the heap of accumulated parcels it is possible to determine the right position for discharge. Before discharge of the new set of parcels, it is very useful to apply stimuli and vibration to the heap of parcels already on the roller cage to increase probability that accumulated parcels reach a more stable position, that is reducing the probability that a parcel is laying with its corner rather that its face over another parcel.

Vibrations applied to the parcel heap have shown to be effective. According to an embodiment, a dedicated motor with unbalanced rotating mass is be added for this purpose on the support structure of the roller cage. However, the preferred solution is to work directly on the parcel heap rather than on the roller cage, using the belt with the enclosed mass, represented by the accumulated parcels inside, and driven to create a cyclic movement over the parcels heap. By this solution parcels are better spread inside the roller cage and parcels laying on corners over other parcels would more likely reach a more stable position.

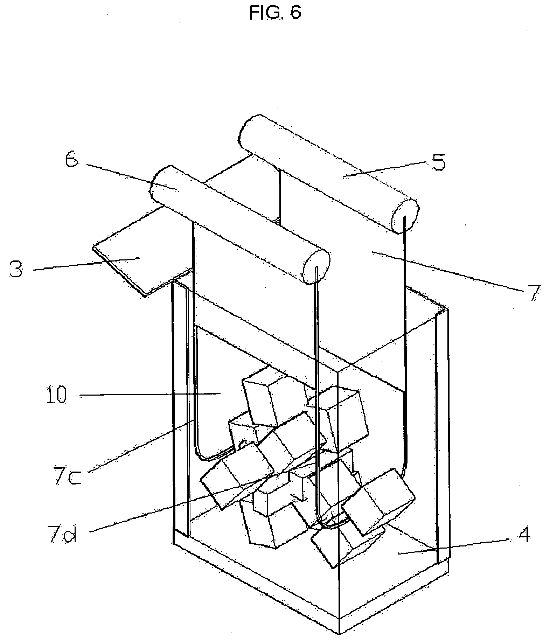

After this phase, the belt is activated for the discharge of accumulated parcels: at a proper distance from the heap the belt is wrapped on one roller and unwrapped on the other, to drive the belt window 10 below the parcels, as shown in Fig. 6. During this phase, the accumulated parcels rotate inside the belt, due to the belt friction. This is also useful for following discharge because the parcels statistically reach a more stable position during rotation.

At this point only the two narrow strip of belt 7c and 7d, reinforced with side profiles, are still below the parcel heap, as shown in Fig. 6. The belt can now be released activating by pulling on both wrapping rollers. During this operation, torque applied by the wrapping rollers produces lifting forces acting on the parcels that are in contact with the narrow strips of belt 7c, 7d of the window. To prevent damages to the parcels and to the parcels packaging material, it is better to use low friction material on the belt but also to limit the total weight of the parcel heap over the belt. This implies that it is necessary to progressively control the total weight of parcels sorted to the intermediate belt bottom, to avoid that excessive weight be accumulated, as described above.

During wrapping of belt to raise the belt strips, forming the window, above the parcels, the two rollers 5, 6 are controlled to execute fast cyclic movement to produce fast vibrations on the belt, in order to reduce friction with parcels, helping to make the belt strips, 7c and 7d of Fig 3, free from the parcels.

When the belt is free, this condition being detected by the control system using the proxy sensors, the wrapping rollers are properly rotated to recover the original disposition of the belt 7, the window 10 being fully enclosed into wrapping of the wrapping roller 5, as it is shown by Fig. 4.

The equipment is now ready to repeat a new cycle if the control system detects room still available into the roller cage.

When the roller cage is determined as full, a visual warning condition is raised to call operator attention. The operator will then inspect to see if filling is satisfactory or if there are large parcels that could be better settled in order to make more room for continuing accumulation. In this case, the operator will reset the warning condition, otherwise he will extract the full roller cage and substitute with an empty one.

As was previously noted, to avoid excessive pressure acting on the belt while pulling to release it from the heap of parcels, it is convenient to fill the roller cages by repeating several cycles: temporary accumulation, lowering, release. This is a simple and effective solution to fill the roller cage without damage, but may have a negative impact on the sorter capacity. Sorting parcels to the roller cage has to be suspended while lowering the temporary parcel accumulation, release and recovery of the intermediate bottom. Therefore, parcels directed to the roller cage have to recirculate on the sorter, waiting for the destination availability. Recirculation of parcels is a simple and flexible solution offered by the sorter, but significant recirculation reduces sorter throughput, which is generally not desirable. When the sorter plant has hundred of destinations, loss of throughput due to temporary unavailability of the destinations to execute the filling cycles will be statistically very low, while in sorter plant with few tenths of destinations the rate of recirculation may reduce significantly throughput.

To reduce recirculation, it is possible to execute roller cage filling in fewer cycles or even in one single cycle lowering progressively the belt bottom while sorting. After each parcel sorted, the control system checks if there is still room using the reflex photocells, otherwise activates the wrapping rollers to lower the belt bottom to get room.

This procedure is obviously possible, but rate of packaging damage will increase due to increasing pulling forces. The described solution is simple and effective when executing several cycles to fill the cage, but it is not the best solution if continuous operation is necessary.

A better solution to reduce recirculation and to let executing a large number of cycles, which is useful to improve the filling quality, is to consider an accumulation roller chute 3 with an actuated stop flap 39, as shown in Fig. 14. In this figure, only the final part of the chute 3 is shown, not the accumulating part fed by the sorter. The flap 39 is a vertical wall that can be raised by pneumatic or electrical actuator. The vertical flap 39, raising from the chute bottom 3a, is the right solution to interrupt the parcels flows without damaging since parcels cannot be jammed or trapped.

Indeed, when the parcels can not be directed to the roller cage (for example when the accumulated parcels are being discharged in the cage), the vertical flap 39 is raised, so that the parcels cannot reach the belt. When the roller cage is made available, the vertical flap 39 is retracted.

The flap can also be used during sorting to regulate the parcel flow, in order to avoid an excessive quantity of parcels reaching the roller cage simultaneously. The flow control can be executed by the PLC (programmable logic controller) using photocells, and temporary interruption of the flow can be performed simply raising the flap.

Other design characteristics may be advantageous for the practical realization of the device.

As expressed before, it may be advantageous to lower the sorted parcels over the heap of the parcels already sorted into the roller cage, before discharge, to create vibrations in order to improve the filling quality. By doing that, it is necessary to determine the position of the parcel heap letting the belt movedown till laying on the parcels already accumulated.

When the belt is lying on the parcels heap, the weight force pulling the belt down is reduced. A similar condition of low pulling force on the belt is experienced when the belt window is driven below the parcels. When the belt pulling force is low, the roller that is rotating to unwrapping the belt will rather cause the increase of the winding radius of the belt around the roller than the descent of the belt. This could cause problems of interference with structures close to the belt and error in the belt position evaluation with the encoder. To avoid this effect it may be necessary to increase the belt pulling force. This can be achieved by a pressing wheel or, according to a preferred embodiment, a pressing pulley possibly rotating at a slightly higher speed than the roller, during un-wrapping, to create an extracting effect.

A simpler solution, if room is available, is to use a taller structure to get more length of the suspended belt, which increases the suspended weight and therefore the belt pulling force. Also, the use of rollers 5, 6 with a diameter as large as possible, as shown in Fig. 14, reduces the hysteresis work to bend the belt, giving less resistance on unwrapping, and allows an heavier belt to be used. All these conditions allow increasing the pulling gravity force acting on the belt during unwrapping.

A second solution for direct sorting into roller cage reducing parcel damage possibility is proposed with the aim of continuous operation, without interruption, up to fully filling the roller cage. The solution is intended to provide a simpler solution than the previous one, although with lower performances in terms of filling quality and efficiency.

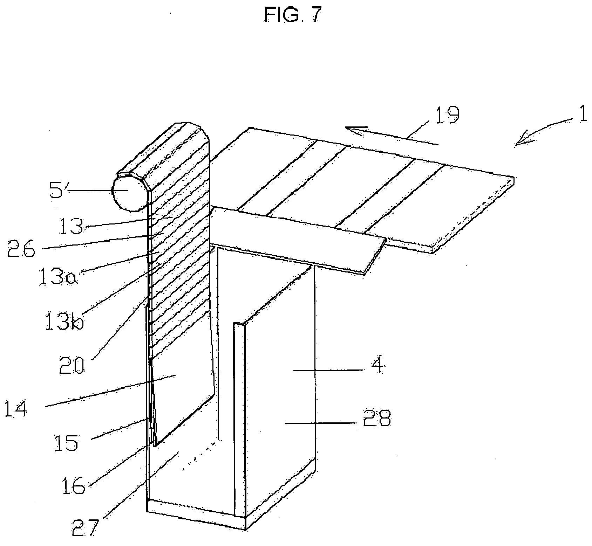

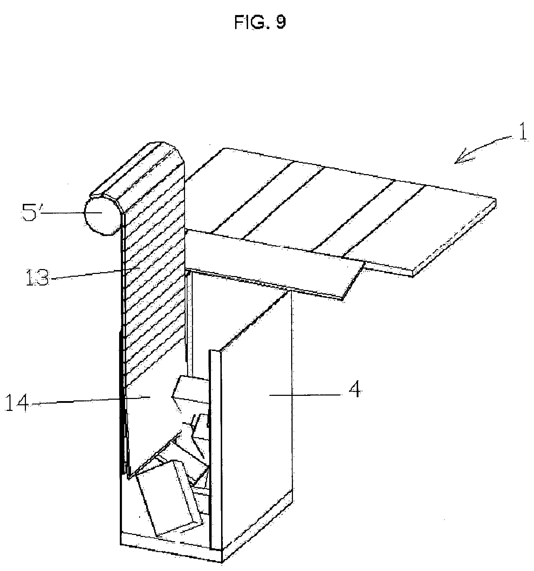

The second embodiment of the invention is described by Fig. 7, 8, 9 and 10. It allows continuous operation, without interruption, up to fully filling the roller cage. The equipment is suspended over the roller cage position, by a wrapping motorized roller 5'. The body part 13 of Fig. 7 is an articulated structure made of cross elements 13a, 13b, hinged one to the other forming a solid and closed surface when hanging inside the roller cage. The cross elements are made of plastic material with low friction coefficient and the hinges inside with the purpose of not exposing any obstacle to parcel slippage while extracting the structure from the roller cage. The structure elements form a duct 20 where air pressure tubes or electrical conductors can be housed. Vertical movement of the structure is actuated by the motorized wrapping roller 5'.

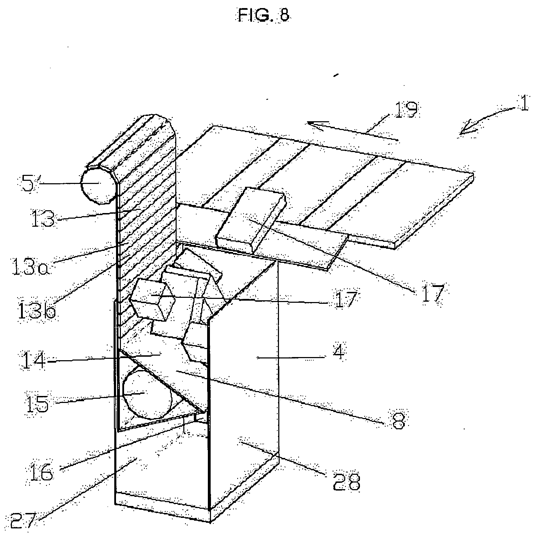

The articulated structure supports an hinged part 14, that can be raised to form an intermediate bottom 8 when a pneumatic cushion 15 is inflated by air pressure controlled by an electro valve. Fig. 8 shows the intermediate bottom

Not shown in the figure are the sides and bottom walls made of elastic material that are necessary to fully close the intermediate bottom, in order to prevent parcels from entering below or from the sides. Applying negative pressure, it is possible to fully deflate the air cushion 15. The hinged part 14 will close to be fully within the section thickness of the body part 13 in order to allow vertical extraction of the equipment without interference, notwithstanding lateral pressure produced by the column of parcels. In the preferred execution, the intermediate bottom is made of two flexible thin plastic plates which include and protect the pneumatic lifting cushion 15. The plates are made of ultra high density material, low friction and self lubricating, and form a rigid support bottom when the lifting air cushion 15 is activated by air pressure.

When the pressure is released to lift and extract the equipment, the plastic plates close including and protecting the empty pneumatic cushion. The parcels heap will fall in the empty space of the cage and the parcels will press the plastic plates applying forces on both sides. To extract the equipment without applying excessive forces to parcels it therefore advantageous that the two plastic plates protecting the air cushion are easily deformable without presenting discontinuities and with low friction property.

Lowering of the intermediate bottom is controlled by the sorter control system by releasing the air pressure of the lifting pneumatic cushion, the control system can progressively reduce the volume of the lifting cushion, letting more space available to collect sorted items.

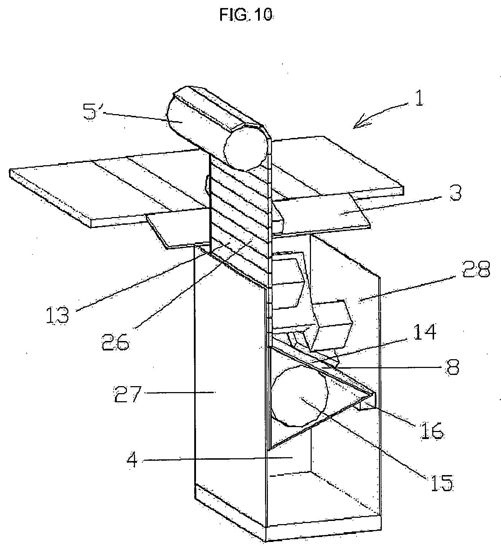

Fig. 7 shows the equipment as it is lowered into an empty roller cage 4. The intermediate bottom is formed by sending air pressure through an electro valve to the pneumatic cushion 15, as shown on Fig. 8, raising the hinged part 14. The hinged element may include at its edge another pneumatic cushion 16 that can be actuated by another control electro-valve. Fig. 10 shows a front pneumatic cushion 16. It is included for two purposes. First it will create pressure against the roller cage wall 28 to lock the hinged element at the set level into the roller cage. The front cushion 16, when actuated, presses the vertical support structure 13 against the roller cage wall 27. In this way, the intermediate bottom will be firmly fixed to the roller cage walls. The second purpose for the front pneumatic cushion 16 is to prevent small packets or part of the packets from entering into the gap between the edge of the hinged element 14 and the wall 28 of the roller cage. For this purpose the pneumatic cushion bends upward an elastic profile, not shown in the figure, at the edge of the hinged element.

Sorted parcels are stacked on the intermediate bottom and the equipment can be progressively lowered based on information from the reflex photocells that check for room available below the sliding chute 3. The preferred solution for lowering the intermediate bottom is simply a progressive release of the air pressure of the pneumatic cushion 15, which will cause progressive reduction of its volume. The design of the hinged part with the lifting cushion can be directed to maximize the volume variation in order to improve the lowering effect before taking the decision to fully deflate the cushion to extract the equipment from the roller cage.

The other possibility of lowering of the intermediate bottom by actuating the motorized roller 5' is also possible but it is more complex. Problem is that the weight of the accumulated parcels presses the articulated support structure against the roller cage wall ; therefore it is possible that the high friction will oppose lowering when the motorized roller 5' is driven to unwrap the articulated structure. To solve this problem, it is advantageous to prevent the articulated structure from bending, toward the roller cage exposing to interference when sorting a parcel. This can be achieved by adding a maintaining wall as the articulated structure leaves the motorized roller 5', and designing the members of the articulated structure to be very rigid and behave like a solid wall when they are unwrapped and subjected to a vertical force.

Then it is advantageous to reduce the necessary vertical force to lower the equipment, which means reducing friction of the articulated support structure against the roller cage wall. To get low friction contact with the roller cage wall, that is usually a steel net, long rollers could be added to the articulated structure elements. This is a rather complex solution because it may be necessary to adapt the design to the characteristics of the wall of the various types of roller cages, in order to assure that the articulated structure will lower with low pushing force by the motorized roller 5'.

This complexity explains why the preferred solution for getting more room into the roller cage, as accumulation of sorted parcels progresses, is by reducing the air pressure of the lifting cushion.

After the intermediate bottom has reached the lowest position, as filling of the roller cage reaches a threshold set by the control system, the control system takes the decision to extract the equipment from the roller cage: it applies negative pressure to the pneumatic cushions 15 and also to the cushion 16, if present. Then the motorized roller 5' drives the equipment above the roller cage. Sorting continues without interruptions till full cage condition. As this condition is reached, the operator attention is called by a visual warning. The operator will remove the full cage and replace with an empty one. When the operator intervenes, it is possible that the roller cage filling is not considered satisfactory because of presence of few large parcels badly disposed. In this case, the operator will settle the large parcels and reset the warning condition for continuing operation, till complete filling.

Differently from the first embodiment, in this case the equipment cannot be engaged again during the roller cage filling. However presence of parcels inside the roller cage will limit falling height of next parcels, thus reducing possibilities of damages.

It is also possible to use the described solution in a way that simplifies the control and reduce complexity and cost. The intermediate bottom formed by the hinged level 14 can be set at one fix level only, as example at mid-cage height. Once a given total volume of parcels have been sorted, the hinged element can be retracted and the whole device can be raised. In this way, the falling height for parcels sorted can be significantly reduced and it is possible to avoid sensors and the second actuated front cushion. In this case, it is possible to apply to the hinged part a simple flexible flap that will be pushed against the roller cage wall when the hinged element is raised.

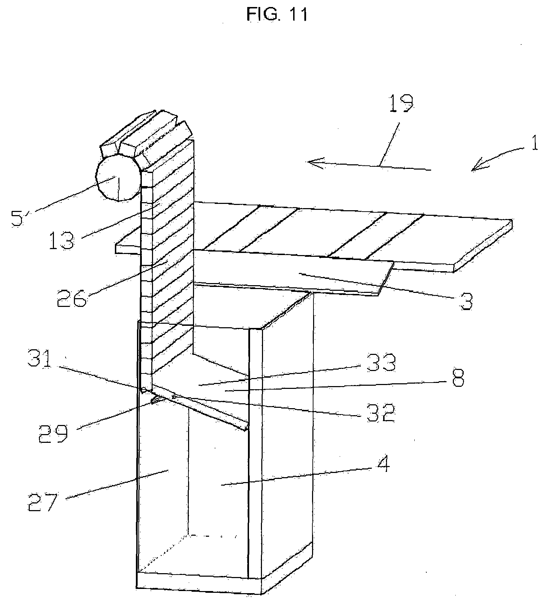

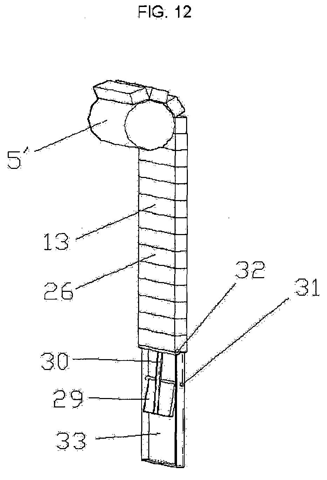

For a fixed position solution, it is possible to use another embodiment that does not require pneumatic actuation: this is shown in Fig. 11, 12 and 13. The intermediate bottom 33 is hinged on the articulated structure 13 thanks to a rotary axis 31 and one raising lever 29 is hinged to the intermediate bottom 33 thanks to a rotary axis 32. The lever 29 is pulled by a strip belt 30 to raise the bottom 33, as shown on Fig. 12.

The strip belt 30 is housed inside the articulated support structure 13 and it is driven by an electrical gear motor with a winch, or by other actuators having same purpose, housed inside the last element of the articulated structure and powered by electrical cables lying inside the structure.

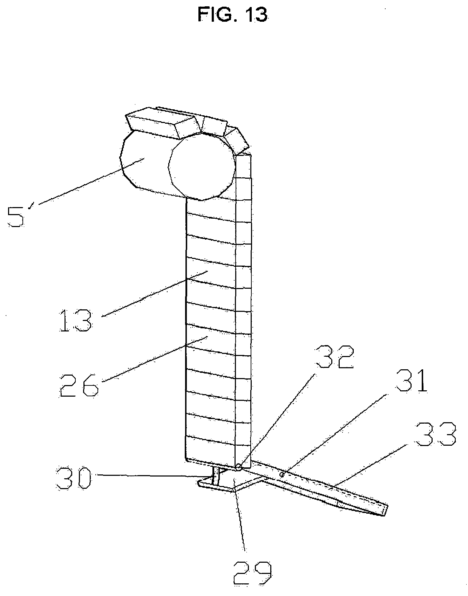

The structure 13 is lowered inside the roller cage with the intermediate bottom 33 in lower position as shown in Fig. 12. After lowering the structure inside the roller cage, the actuator pulls the strip belt 30, causing the hinged bottom to rise as shown in Fig. 13.

The articulated structure 13 can be lowered to a fixed intermediate position. The intermediate hinged bottom 8 is a hinged part 33 provided with a lever 29 that can be pulled by a strip belt 30.

The weight of the sorted parcels acting on the hinged bottom causes a torque which develops a large force on the strip belt, due to the reduced arm length available. In a practical implementation, the force could reach 3,000 N, applied to the strip belt 30 and to the gear reducer of the motor, which has to be sized properly. When the roller cage full condition is detected, the control system slowly releases the strip belt, which causes lowering of the bottom 19: the accumulated parcels fall and the articulated structure can be extracted by the motorized roller 5'.

The described solution for direct sorting into roller cages can be adapted to different application conditions.

In most applications, there are few destinations 34, i.e. few roller cages 4, with large parcels flow, and a large number of destinations 34, i.e. a large number of roller cages 4, with low parcels flow. For the latter, it may be unjustified to provide an equipment or device according to the invention for each destination.

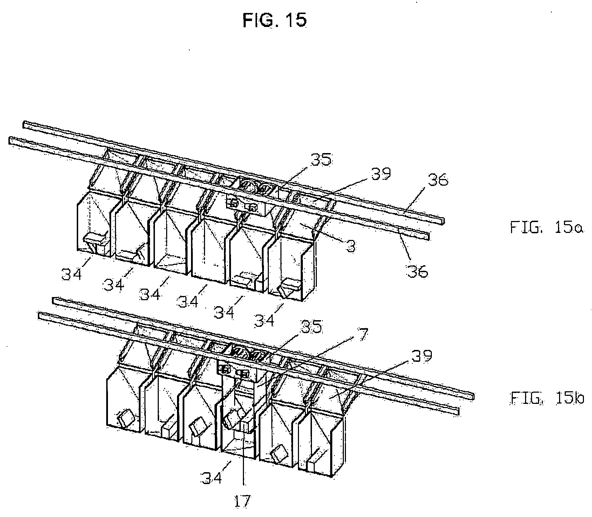

By providing the described solution with the possibility to move along the destinations chutes, it will be possible to serve few destinations with only one device 35, as shown in Fig. 15a and 15b. As a matter of example, the device 35 comprises a fabric belt 7 suspended between two motorized wrapping rollers 5 and 6 over the roller cage 4, as described above with reference to Figures 2-6 and 14.

Each destination is provided with an accumulation chute 3 comprising a vertical controlled flap 39, as described above with reference to Figure 14. Therefore, the sorted parcels can accumulate before each chute 3.

Over the destination chutes, two tracks 36 allow the device 35 to be moved from one destination 34 to the other. When the chute 3 of a destination has a sufficient quantity of parcels to justify a mission, the device 35 will position over the destination as shown in Fig. 15a and will transfer the accumulated items to the destination roller cage as shown in Fig. 15b following the procedure already described for the fixed position device. At the end of the transfer process, the belt being wrapped on the rollers, the device is able to move along the tracks to reach another destination to be served.

Another new utilization of the described solution for sorting into roller cages is to serve superimposed sorters that are working in parallel to same destinations. There are applications where the sorting capacity required is over the capabilities of a single sorter. It is a common scheme in this case to use superimposed independent sorters, as example two sorters to get double capacity, sorting to superimposed chutes with proper solution to merge the parcels flows directed to same destination.

A common merge solution is by using spiral chutes with two inputs, managing sorters to prevent collision between large parcels coming from the two sorters: after the spiral chutes, parcels are accumulated and then manually loaded into roller cages. This solution generally requires large room available and some complexity to prevent parcel collision in the merging chutes, and large chutes for manual operation.

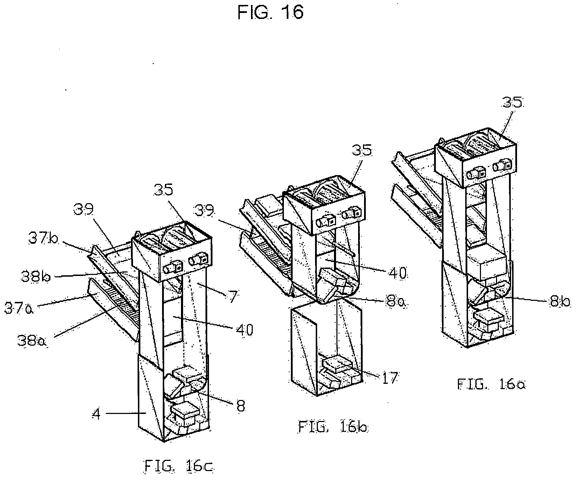

By using the solution for direct sorting into roller cage, as shown in Fig. 16, it is possible to take advantage of the lifting capability of the solution to transfer parcels from both accumulation chutes 38a, 38b to same roller cage 4. It is advantageous to use a longer belt 7 and a different flap solution to stop parcels in the lower chute. The lower chute is preferably a motorized roller conveyor with a vertical flap 40 that can be raised or lowered. When the flap is raised, it creates a vertical wall to let safe transfer of parcels from the upper chute to the roller cage as shown in Fig. 16b and 16c.

To serve the lower roller chute 38b, the vertical flap 40 is removed, lowered or tilted and the roller motorized conveyor is used to send parcels to the belt as shown in fig 16a, wherein the roller conveyor is used to control the parcel flow and to accumulate parcels. In the meanwhile parcels sorted by the upper sorter are accumulated on the upper chute, whose flap is raised as shown in Fig. 16a. The accumulation chute above the flap is not shown in the figure for simplicity.

## Claims

1. Method for sorting items (17) conveyed by at least one sorter (1) into at least one roller cage (4) for reducing damage rate, comprising the automatic insertion into the cage of a temporary intermediate bottom (8) that can be actively set at one or more levels to collect sorted items (17) and then removed when the cage (4) is at least partially full, the positioning of the temporary intermediate bottom (8) and the operation of the sorter (1) being determined by control devices, as photocells, **characterized in that** the positioning of the temporary intermediate bottom (8) and the operation of the sorter (1) take into account the physical characteristics, including weight and volume, of items (17) already sorted and of those that are still on the sorter (1).

2. Method according to claim 1 **characterized in that** the intermediate bottom (8) can be progressively lowered to best filling the roller cage (4), lowering being controlled using level information by sensor or other means.

3. Method according to any one of claims 1 or 2, **characterized in that** the temporary intermediate bottom (8) is provided by a suspended belt (7) supported by two motorized rollers (5, 6) installed above the roller cage (4), and **in that** the method comprises the lowering of the belt (7) inside the roller cage (4) by means of motorized rollers (5, 6) to collect sorted items (17) through two vertical walls (7a, 7b) formed by the belt (7), and the discharge of items (17) accumulated in the belt intermediate bottom (8), performed by rotating the belt (7) below the items (17) by means of said motorized rollers (5, 6) till bringing a belt opening (10) below the items (17).

4. Method according to claim 3, **characterized in that** it comprises the estimation of the weight of the items (17) accumulated on the temporary bottom (8) formed by the belt (7), by measuring the current values of the motors of the rollers (5, 6), the estimation of the weight being executed in order to prevent accumulating items(17) over a given threshold, and the method also comprising determining the height of the heap of items(17) already discharged into the roller cage(4) in order to position properly the temporary intermediate bottom (8), the determination of the heap of items already discharged being performed by detecting when the belt(7) is laying over the heap of items when a reduction of the measured weight is detected.

5. Method according to any one of claims 1 to 4, **characterized in that** alternate forces are transmitted to the heap of accumulated items(17)already discharged into the roller cage (4) in order to increase the probability that the items on the heap reach a stable condition and/or to improve the roller cage filling, and said alternate forces are produced either by the belt, by executing cyclic activations of the rollers (5,6),or by vibration of the roller cage structure.

6. Method according to any of claims 1 to 5, **characterized in that** it comprises the sorting of the items (17) into several roller cages (4) through several parcel accumulation chutes (3), each roller cage (4) being associated to one parcel accumulation chute (3), by means of a device (35)including said temporary intermediate bottom (8), said method comprising the accumulation of sorted items (17) into at least one accumulation chute (3), the moving of the device (35) along tracks (36) over the roller cage (4) associated to said accumulation chute (3), and the transfer of the sorted items (17) accumulated in said accumulation chute (3) to said roller cage.

7. Method according to any of claims 1 to 6, **characterized in that** it comprises the sorting of the items (17) by superimposed parallel sorters (37a, 37b) into a common roller cage (4) through several parcel accumulation chutes (38a, 38b), said method comprising the accumulation of sorted items (17) into each accumulation chute (38a, 38b),the formation of said temporary intermediate bottom (8a, 8b) to collect sorted items (17) from each accumulating chutes (38a, 38b) and the transfer of the sorted items (17) accumulated in each accumulation chute (38a, 38b) to said roller cage in distinct time intervals.

8. Equipment adapted to implement the method according to any of claims 1 to 7, for sorting items (17) conveyed by at least one sorter (1) into at least one roller cage (4) for reducing damage rate, comprising a sorter (1) and a temporary intermediate bottom (8) adapted to be automatically inserted into the cage (4)and to be set at one or more levels to collect sorted items (17) and removed when the cage (4) is at least partially full, wherein the positioning of the temporary intermediate bottom (8) and the operation of the sorter (1)are determined by control devices, as photocells, and take into account the physical characteristics, including weight and volume, of items (17) already sorted and those that are still on the sorter (1).

9. Equipment according to claim 8, **characterized in that** it comprises at least one thin support structure(26) supporting said temporary intermediate bottom(8), said support structure being perpendicular to the sorter direction (19) and lying close to the roller cage walls(27,28)in such a way that it does not interfere with trajectory of sorted items (17), said thin support structure and the temporary bottom, while being extracted from the heap formed by sorted items(17), do not present discontinuities that could cause jam with items and are flexible and low friction to prevent damages to items or to their packaging material.

10. Equipment according to claim9, **characterized in that** two support structures and the temporary bottom(8) are formed by same suspended belt(7),supported by two motorized rollers(5,6)installed above the roller cage(4),the belt can be lowered inside the roller cage (4) to collect sorted items through two vertical walls(7a,7b)perpendicular to the sorter and formed by the belt(7), said belt comprises an opening (10),the discharge of items accumulated in the belt intermediate bottom(8)being performed by rotating the belt(7) below the items(17) by means of motorized rollers(5,6) till bringing said belt opening(10) below the items.

11. Equipment according to claim 10, **characterized in that** it comprises extendable arms(41); during accumulation of items on the temporary bottom, the extended arms maintain the vertical walls(7a,7b) of the belt (7) in position in order to prevent said vertical walls (7a,7b)interfering with passing items; during discharge of the items from the intermediate bottom(8) to the roller cage(4), said extendable arms (41) are tilted away or fully retracted.

12. Equipment according to claim 9, **characterized in that** a generator of vibration is added to the roller cage (4) in order to transmit alternate forces to the heap of accumulated sorted items (17) already discharged into the roller cage (4).

13. Equipment according to claim 8, adapted to implement the method according to claim 6, **characterized in that** it comprises tracks (36) over the roller cages, the device (35) being adapted to move or to be moved along tracks (36) over the roller cages to be used in different time intervals to transfer sorted items (17) from each accumulating chutes (3) to the associated roller cages (4).

14. Equipment according to claim 8, adapted to implement the method according to claim 7, **characterized in that** it comprises at least two superimposed accumulation chutes (38&, 38b), the device (35) being adapted to serve said two superimposed accumulation chutes (38a, 38b), to transfer, in different time intervals, sorted items (17) to a common roller cage (4).

15. Equipment according to any of claims 8 to 14, **characterized in that** it includes actively controlled motorized wrapping rollers (5, 6), fitted over a roller cage (4), positioned with their axis (9) orthogonal to the sorter direction (19), capable of dropping into the roller cage a special belt (7), in order to create a temporary intermediate bottom (8) to reduce falling height for the sorted items (17), to collect sorted items (17) and to gently lower the sorted items (17) inside the roller cage (4), and then to remove the belt (7) from the heap of sorted items (17) to repeat a new cycle with the following set of sorted items (17) up to complete filling of the roller cage (4), the belt width (21) being close to the length (23) of the roller cage (4), the belt (7) having an open window (10) with a length (25) longer than the roller cage width (24) and a width (22) close to the belt width (21) due to, at the opening, only a narrow strip of belt (7c, 7d) at each side of the belt (7) in the widthwise direction.

16. Equipment according to claim 8, **characterized in that** the support structure (26) is part of a thin articulated structure(13) that can be actively lowered inside an empty roller cage(4) and then removed by lifting when the roller cage(4) is full of sorted items, the structure(13) is provided with features to easily slide on the roller cage wall(27) when lifted and with an hinged part(14)that can be opened when actuated, for example by a pneumatic cushion(15)or other means as small electrical actuators or cables transmitting forces remotely applied by an electric motor by a lever pulled by a strip belt, in order to create a temporary intermediate bottom(8) to reduce falling height for the sorted items; the hinged part is provided with a cushion (15) installed in the front edge that, when actuated pneumatically or by electrical actuator, causes pressure against the roller cage wall(28) to firmly fix the intermediate bottom (8) between the opposite cage walls(27,28); the hinged part (14) has a cross section smaller than the articulated structure(13) cross section, when is not activated, in order to cause minimum resistance to equipment lifting when the roller cage is full.

17. Method to control an equipment according to claim 16, **characterized in that** the lowering of the intermediate bottom (8) is controlled by a sorter control system by releasing the air pressure of the lifting pneumatic cushion (15), and **in that** the control system can progressively reduce the volume of the lifting cushion (15), letting more space available to collect sorted items (17).

## Patentansprüche

1. Verfahren zum Sortieren von Gegenständen (17), welche von mindestens einem Sortierer (1) in mindestens einen Rollkäfig (4) befördert werden, zum Verringern einer Beschädigungsquote, aufweisend das automatische Einbringen in den Käfig von einem temporären Zwischenboden (8), welcher aktiv bei einer oder mehreren Ebenen festgelegt werden kann, um sortierte Gegenstände (17) aufzunehmen, und dann entfernt werden kann, wenn der Käfig (4) zumindest teilweise voll ist, wobei das Positionieren des temporären Zwischenbodens (8) und der Betrieb des Sortierers (1) von Steuervorrichtungen wie Photozellen bestimmt werden, **dadurch gekennzeichnet, dass** das Positionieren des temporären Zwischenbodens (8) und der Betrieb des Sortierers (1) die physikalischen Eigenschaften, welche Gewicht und Volumen aufweisen, von Gegenständen (17), welche bereits sortiert sind, und von solchen, welche sich noch auf dem Sortierer (1) befinden, berücksichtigt.

2. Verfahren gemäß Anspruch 1, **dadurch gekennzeichnet, dass** der Zwischenboden (8) zunehmend abgesenkt werden kann, um den Rollkäfig (4) bestmöglich zu füllen, wobei das Absenken gesteuert wird , indem eine Ebeneninformation anhand von Sensoren oder anderen Mitteln genutzt wird.

3. Verfahren gemäß einem der Ansprüche 1 oder 2, **dadurch gekennzeichnet, dass** der temporäre Zwischenboden (8) durch ein hängendes Band (7) bereitgestellt ist, welches von zwei Motorrollen (5,6) getragen ist, welche über dem Rollkäfig (4) angebracht sind, und dadurch, dass das Verfahren das Absenken des Bands (7) in dem Rollkäfig (4) mittels der Motorrollen (5, 6) aufweist, um sortierte Gegenstände (17) durch zwei vertikale Wände (7a, 7b), welche von dem Band gebildet werden, aufzunehmen, und das Abladen von Gegenständen (17), die in dem Bandzwischenboden (8) angesammelt sind, was mittels Rotierens des Bands (7) unter den Gegenständen mittels der genannten Motorrollen (5, 6) ausgeführt wird, bis eine Bandöffnung (10) unter den Gegenständen (17) ist.

4. Verfahren gemäß Anspruch 3, **dadurch gekennzeichnet, dass** es aufweist das Abschätzen des Gewichts der Gegenstände (17), welche auf dem temporären Boden (8), welcher durch das Band (7) gebildet wird, angesammelt sind, mittel Messens der Stromwerte der Motoren der Rollen (5, 6), wobei das Abschätzen des Gewichts ausgeführt wird, um ein Ansammeln von Gegenständen (17) über einen bestimmten Grenzwert zu verhindern, und das Verfahren auch aufweist ein Bestimmen der Höhe des Haufens von Gegenständen (17), welche bereits in den Rollkäfig (4) abgeladen sind, um den temporären Zwischenboden (8) richtig zu positionieren, wobei das Bestimmen des Haufens von Gegenständen, welche bereits abgeladen sind, ausgeführt wird mittels Erkennens, wenn das Band (7) über dem Haufen von Gegenständen liegt, wenn eine Verringerung des gemessenen Gewichts erkannt wird.

5. Verfahren gemäß einem der Ansprüche 1 bis 4, **dadurch gekennzeichnet, dass** wechselnde Kräfte an den Haufen von angesammelten Gegenständen (17), welche bereits in den Rollkäfig (4) abgeladen sind, übertragen werden, um die Wahrscheinlichkeit zu erhöhen, dass die Gegenstände auf dem Haufen einen stabilen Zustand erreichen, und/oder um die Füllung des Rollkäfigs zu verbessern, und die genannten wechselnden Kräfte werden entweder durch das Band mittels Anwendens zyklischer Aktivierungen der Rollen (5, 6) erzeugt, oder mittels Vibration der Rollkäfigstruktur.

6. Verfahren gemäß einem der Ansprüche 1 bis 5, **dadurch gekennzeichnet, dass** es aufweist das Sortieren der Gegenstände (17) in mehrere Rollkäfige (4) durch mehrere Paketsammelschächte (3), wobei jeder Rollkäfig (4) einem der Paketsammelschächte (3) zugeordnet ist, mittels einer Vorrichtung (35), welche den genannten temporären Zwischenboden (8) aufweist, wobei das genannte Verfahren aufweist das Ansammeln von sortierten Gegenständen (17) in mindestens einen Sammelschacht (3), das Bewegen der Vorrichtung (35) entlang von Wegen (36) über den Rollkäfig (4), der dem genannten Sammelschacht (3) zugeordnet ist, und das Übertragen der sortierten Gegenstände (17), welche in dem genannten Sammelschacht (3) angesammelt sind, in den genannten Rollkäfig.

7. Verfahren gemäß einem der Ansprüche 1 bis 6, **dadurch gekennzeichnet, dass** es aufweist das Sortieren der Gegenstände (17) mittels überlagerter paralleler Sortierer (37a, 37b) in einen gemeinsamen Rollkäfig durch mehrere Paketsammelschächte (38a, 38b), wobei das genannte Verfahren aufweist das Ansammeln von sortierten Gegenständen (17) in jeden Sammelschacht (38a, 38b), das Bilden des genannten temporären Zwischenbodens (8a, 8b), um sortierte Gegenstände (17) von jedem Sammelschacht (38a, 38b) zu sammeln, und das Übertragen der sortierten Gegenstände (17), welche in jedem der genannten Sammelschächte (38a, 38b) angesammelt sind, in den genannten Rollkäfig in bestimmten Zeitintervallen.

8. Einrichtung, die geeignet ist, das Verfahren gemäß einem der Ansprüche 1 bis 7 auszuführen, zum Sortieren von Gegenständen (17), welche von mindestens einem Sortierer (1) in mindestens einen Rollkäfig (4) befördert werden, zum Verringern einer Beschädigungsquote, aufweisend einen Sortierer (1) und einen temporären Zwischenboden (8), welcher geeignet ist, automatisch in den Käfig (4) eingebracht zu werden und auf eine oder mehrere Ebenen eingestellt zu werden, um sortierte Gegenstände (17) zu sammeln, und entfernt zu werden, wenn der Käfig (4) zumindest teilweise gefüllt ist, wobei das Positionieren des temporären Zwischenbodens (8) und der Betrieb des Sortierers (1) bestimmt sind mittels Steuervorrichtungen wie Photozellen, und die physikalischen Eigenschaften, welche Gewicht und Volumen aufweisen, von Gegenständen (17), welche bereits sortiert sind, und von solchen, welche sich noch auf dem Sortierer (1) befinden, berücksichtigt.

9. Einrichtung gemäß Anspruch 8, **dadurch gekennzeichnet, dass** sie zumindest eine dünne Stützstruktur (26) aufweist, welche den genannten temporären Zwischenboden (8) stützt, wobei die genannte Stützstruktur senkrecht zur Sortiererrichtung (19) ist und nahe den Wänden (27, 28) des Rollkäfigs liegt, derart, dass sie eine Bewegungsbahn der sortierten Gegenstände (17) nicht stört, wobei die dünne Stützstruktur und der temporäre Boden, während sie aus dem Haufen, der von den sortierten Gegenständen (17) gebildet wird, herausgezogen werden, keine Diskontinuität darstellen, welche zu einem Stau von Gegenständen führen könnten, und sind flexibel und haben eine geringe Reibung, um Schäden an den Gegenständen oder deren Verpackungsmaterial zu vermeiden.

10. Einrichtung gemäß Anspruch 9, **dadurch gekennzeichnet, dass** zwei Stützstrukturen und der temporäre Boden (8) durch dasselbe hängende Band (7) gebildet sind, welches von zwei Motorrollen (5,6) getragen ist, welche über dem Rollkäfig (4) angebracht sind, wobei das Band abgesenkt werden kann in dem Rollkäfig (4), um sortierte Gegenstände durch zwei vertikale Wände (7a, 7b) senkrecht zum Sortierer und von dem Band (7) gebildet, aufzunehmen, wobei das genannte Band eine Öffnung (10) aufweist, wobei das Abladen von Gegenständen, die in dem Bandzwischenboden (8) angesammelt sind, mittels Rotierens des Bands (7) unter den Gegenständen (17) mittels Motorrollen (5, 6) ausgeführt wird, bis die genannte Bandöffnung (10) unter die Gegenstände (17) gebracht ist.

11. Einrichtung gemäß Anspruch 10, **dadurch gekennzeichnet, dass** sie verlängerbare Arme (41) aufweist; während eines Ansammelns von Gegenständen auf dem temporären Boden halten die verlängerten Arme die vertikalen Wände (7a, 7b) des Bands (7) in Position, um zu verhindern, dass die vertikalen Wände (7a, 7b) passierende Gegenstände stören; während eines Abladens der Gegenstände vom Zwischenboden (8) zum Rollkäfig (4) sind die genannten verlängerbaren Arme (41) weggeschwenkt oder vollständig zurückgezogen.

12. Einrichtung gemäß Anspruch 9, **dadurch gekennzeichnet, dass** dem Rollkäfig (4) ein Vibrationserzeuger hinzugefügt ist, um wechselnde Kräfte auf den Haufen angesammelter sortierter Gegenstände (17), welche bereits in den Rollkäfig (4) abgeladen sind, zu übertragen.

13. Einrichtung gemäß Anspruch 8, welche geeignet ist, das Verfahren gemäß Anspruch 6 auszuführen, **dadurch gekennzeichnet, dass** sie Pfade (36) über den Rollkäfigen aufweist, wobei die Vorrichtung (35) geeignet ist, sich entlang der Pfade (36) über die Rollkäfige zu bewegen oder bewegt zu werden, um in verschiedenen Zeitintervallen genutzt zu werden, um sortierte Gegenstände (17) von jedem der Sammelschächte (3) an die zugeordneten Rollkäfige (4) zu übertragen.

14. Einrichtung gemäß Anspruch 8, welche geeignet ist, das Verfahren gemäß Anspruch 7 auszuführen, **dadurch gekennzeichnet, dass** sie mindestens zwei überlagerte Sammelschächte (38a, 38b) aufweist, wobei die Vorrichtung (35) geeignet ist, die zwei genannten überlagerten Sammelschächte (38a, 38b) zu bedienen, um in verschiedenen Zeitintervallen sortierte Gegenstände (17) an einen gemeinsamen Rollkäfig (4) zu übertragen.

15. Einrichtung gemäß einem der Ansprüche 8 bis 14, **dadurch gekennzeichnet, dass** sie aktiv gesteuerte Motorwickelrollen (5, 6) aufweist, welche über einen Rollkäfig (4) gepasst sind, wobei sie mit ihren Achsen (9) senkrecht zur Sortierrichtung (19) positioniert sind, welche in der Lage sind, ein den Rollkäfig ein spezielles Band (7) hinabzulassen, um einen temporären Zwischenboden (8) zu erzeugen, um eine Fallhöhe für die sortierten Gegenstände (17) zu verringern, um sortierte Gegenstände (17) aufzunehmen und die sortierten Gegenstände (17) sanft innerhalb des Rollkäfigs (4) abzusenken und dann das Band (7) von dem Haufen der sortierten Gegenstände zu entfernen, um einen neuen Zyklus mit dem folgenden Satz sortierter Gegenstände (17) zu wiederholen bis zu einem vollständigen Füllen des Rollkäfigs, wobei die Bandbreite (21) beinahe die Länge (23) des Rollkäfigs (4) ist, wobei das Band (7) ein offenes Fenster (10) hat mit einer Länge (25), welche länger ist als die Rollkäfigbreite (24) und eine Breite (22), welche beinahe die Bandbreite (21) ist, wegen eines an der Öffnung lediglich schmalen Streifens (7c, 7d) des Bands an jeder Seite des Bands (7) in der Breitenrichtung.

16. Einrichtung gemäß Anspruch 8, **dadurch gekennzeichnet, dass** die Stützstruktur (26) Teil einer dünnen Gelenkstruktur (13) ist, welche aktiv in einem leeren Rollkäfig (4) abgesenkt werden kann und dann entfernt werden kann mittels Anhebens, wenn der Rollkäfig (4) mit sortierten Gegenständen gefüllt ist, wobei die Struktur (13) mit Merkmalen ausgestattet ist, um leicht auf den Rollkäfigwänden (27) zu gleiten, wenn sie angehoben wird, und mit einem Gelenkteil (14), welcher geöffnet werden kann, wenn er betätigt ist, beispielsweise mittels eines pneumatischen Kissens (15) oder anderen Mitteln wie kleinen elektrischen Aktuatoren oder Kabeln, welche Kräfte übertragen, welche aus der Ferne mittels eines Motors durch einen Hebel, der durch ein Lamellenband gezogen wird, aufgebracht werden, um einen temporären Zwischenboden (8) zu erzeugen, um eine Fallhöhe für die sortierten Gegenstände zu verringern; der Gelenkteil ist mit einem Kissen (15) versehen, welches in der Vorderkante montiert ist, welches, wenn es pneumatisch oder mittels elektrischem Aktuator betätigt wird, einen Druck gegen die Rollkäfigwand (28) verursacht, um den Zwischenboden (8) sicher zwischen den einander gegenüberliegenden Käfigwänden (27, 28) zu befestigen; der Gelenkteil (14) weist einen Querschnitt auf, der kleiner ist als der Querschnitt der Gelenkstruktur, wenn er nicht betätigt ist, um einen minimalen Widerstand für ein Anheben der Einrichtung zu verursachen, wenn der Rollkäfig voll ist.

17. Verfahren zum Steuern einer Vorrichtung gemäß Anspruch 16, **dadurch gekennzeichnet, dass** das Absenken des Zwischenbodens (8) gesteuert ist mittels eines Sortiersteuersystems mittels Entlassens des Luftdrucks des anhebenden pneumatischen Kissens, und dadurch, dass das Steuersystem das Volumen des anhebenden Kissens (15) zunehmend verringern kann, wodurch mehr Raum bereitgestellt wird, um sortierte Gegenstände (17) aufzunehmen.

## Revendications

1. Procédé pour trier des articles (17) transportés par au moins une trieuse (1) dans au moins une cage à rouleaux (4) pour réduire le taux d'endommagement, comprenant l'insertion automatique dans la cage d'un fond intermédiaire temporaire (8) qui peut être activement placé à un ou plusieurs niveaux pour collecter les articles (17) triés, et ensuite retiré lorsque la cage (4) est au moins partiellement pleine, le positionnement du fond intermédiaire temporaire (8) et le fonctionnement de la trieuse (1) étant déterminés par des dispositifs de commande, comme des cellules photoélectriques, **caractérisé en ce que** le positionnement du fond intermédiaire temporaire (8) et le fonctionnement de la trieuse (1) prennent en compte les caractéristiques physiques, comprenant le poids et le volume des articles (17) déjà triés et de ceux qui sont encore sur la trieuse (1).

2. Procédé selon la revendication 1, **caractérisé en ce que** le fond intermédiaire (8) peut être progressivement abaissé pour un meilleur remplissage de la cage à rouleaux (4), l'abaissement étant commandé en utilisant l'information de niveau par un capteur ou d'autres moyens.

3. Procédé selon l'une quelconque des revendications 1 ou 2, **caractérisé en ce que** le fond intermédiaire temporaire (8) est fourni par une courroie suspendue (7) supportée par deux rouleaux motorisés (5, 6) installés au-dessus de la cage à rouleaux (4) et **en ce que** le procédé comprend l'abaissement de la courroie (7) à l'intérieur de la cage à rouleaux (4) au moyen des rouleaux motorisés (5, 6) pour collecter des articles (17) triés à travers deux parois verticales (7a, 7b) formées par la courroie (7), et la décharge des articles (17) accumulés dans le fond intermédiaire de courroie (8), réalisée en faisant tourner la courroie (7) au-dessous des articles (17) au moyen desdits rouleaux motorisés (5, 6) jusqu'à amener une ouverture de courroie (10) au-dessous des articles (17).

4. Procédé selon la revendication 3, **caractérisé en ce qu'**il comprend l'estimation du poids des articles (17) accumulés sur le fond temporaire (8) formé par la courroie (7), en mesurant les valeurs actuelles des moteurs des rouleaux (5, 6), l'estimation du poids étant exécutée afin d'empêcher l'accumulation des articles (17) au-delà d'un seuil donné, et le procédé comprend également l'étape consistant à déterminer la hauteur du tas d'articles (17) déjà déchargés dans la cage à rouleaux (4) afin de positionner correctement le fond intermédiaire temporaire (8), la détermination du tas d'articles déjà déchargés étant réalisée en détectant le moment où la courroie (7) est posée sur le tas d'articles lorsqu'une réduction du poids mesuré est détectée.

5. Procédé selon l'une quelconque des revendications 1 à 4, **caractérisé en ce que** des forces alternées sont transmises au tas d'articles (17) accumulés déjà déchargés dans la cage à rouleaux (4) afin d'augmenter la probabilité que les articles sur le tas atteignent une condition stable et/ou afin d'améliorer le remplissage de la cage à rouleaux, et lesdites forces alternées sont produites par la courroie, en exécutant les activations cycliques des rouleaux (5, 6) ou par la vibration de la structure de la cage à rouleaux.

6. Procédé selon l'une quelconque des revendications 1 à 5, **caractérisé en ce qu'**il comprend le tri des articles (17) dans plusieurs cages à rouleaux (4) par plusieurs goulottes d'accumulation de colis (3), chaque cage à rouleaux (4) étant associée à une goulotte d'accumulation de colis (3), au moyen d'un dispositif (35) comprenant ledit fond intermédiaire temporaire (8), ledit procédé comprenant les étapes consistant à accumuler les articles (17) triés dans au moins une goulotte d'accumulation (3), déplacer le dispositif (35) le long des voies (36) sur la cage à rouleaux (4) associée à ladite goulotte d'accumulation (3) et transférer les articles (17) triés accumulés dans ladite goulotte d'accumulation (3) à ladite cage à rouleaux.

7. Procédé selon l'une quelconque des revendications 1 à 6, **caractérisé en ce qu'**il comprend l'étape consistant à trier les articles (17) avec des trieuses (37a, 37b) superposées parallèles dans une cage à rouleaux (4) commune par le biais de plusieurs goulottes d'accumulation de colis (38a, 38b), ledit procédé comprenant les étapes consistant à accumuler les articles (17) triés dans chaque goulotte d'accumulation (38a, 38b), former ledit fond intermédiaire temporaire (8a, 8b) pour collecter les articles (17) triés provenant de chaque goulotte d'accumulation (38a, 38b) et transférer les articles (17) triés accumulés dans chaque goulotte d'accumulation (38a, 38b) à ladite cage à rouleaux dans des intervalles de temps distincts.

8. Equipement adapté pour mettre en oeuvre le procédé selon l'une quelconque des revendications 1 à 7, pour trier des articles (17) transportés par au moins une trieuse (1) dans au moins une cage à rouleaux (4) afin de réduire le taux d'endommagement, comprenant une trieuse (1) et un fond intermédiaire temporaire (8) adapté pour être automatiquement inséré dans la cage (4) et pour être placé à un ou plusieurs niveaux afin de collecter les articles (17) triés, et retiré lorsque la cage (4) est au moins partiellement pleine, dans lequel le positionnement du fond intermédiaire temporaire (8) et le fonctionnement de la trieuse (1) sont déterminés par des dispositifs de commande, comme des cellules photoélectriques, et prennent en compte les caractéristiques physiques, comprenant le poids et le volume des articles (17) déjà triés et de ceux qui sont encore sur la trieuse (1).

9. Equipement selon la revendication 8, **caractérisé en ce qu'**il comprend au moins une structure de support fine (26) supportant ledit fond intermédiaire temporaire (8), ladite structure de support étant perpendiculaire à la direction (19) de la trieuse et étant à proximité des parois (27, 28) de la cage à rouleaux afin qu'elle n'interfère pas avec la trajectoire des articles (17) triés, ladite structure de support fine et le fond temporaire, tout en étant extraits du tas formé par les articles (17) triés, ne présentent pas de discontinuités qui pourraient se coincer avec les articles et sont flexibles et présentent une faible friction pour empêcher l'endommagement des articles ou de leur matériau d'emballage.

10. Equipement selon la revendication 9, **caractérisé en ce que** deux structures de support et le fond temporaire (8) sont formés par la même courroie (7) suspendue, supportée par deux rouleaux motorisés (5, 6) installés sur la cage à rouleaux (4), la courroie peut être abaissée à l'intérieur de la cage à rouleaux (4) pour collecter les articles triés à travers deux parois verticales (7a, 7b) perpendiculaires à la trieuse et formées par la courroie (7), ladite courroie comprend une ouverture (10), la décharge des articles accumulés dans le fond intermédiaire de courroie (8) étant réalisée en faisant tourner la courroie (7) au-dessous des articles (17) au moyen de rouleaux motorisés (5, 6) jusqu'à amener ladite ouverture de courroie (10) sous les articles.

11. Equipement selon la revendication 10, **caractérisé en ce qu'**il comprend des bras extensibles (41) ; pendant l'accumulation des articles sur le fond temporaire, les bras extensibles maintiennent les parois verticales (7a, 7b) de la courroie (7) en position afin d'empêcher lesdites parois verticales (7a, 7b) d'interférer avec le passage des articles; pendant la décharge des articles du fond intermédiaire (8) à la cage à rouleaux (4), lesdits bras extensibles (41) sont inclinés à distance ou sont complètement rétractés.

12. Equipement selon la revendication 9, **caractérisé en ce qu'**un générateur de vibration est ajouté à la cage à rouleaux (4) afin de transmettre des forces alternées au tas d'articles (17) triés accumulés déjà déchargés dans la cage à rouleaux (4).

13. Equipement selon la revendication 8, adapté pour mettre en oeuvre le procédé selon la revendication 6, **caractérisé en ce qu'**il comprend des voies (36) sur la cage à rouleaux, le dispositif (35) étant adapté pour se déplacer ou être déplacé le long des voies (36) sur les cages à rouleaux, afin d'être utilisé à des intervalles de temps différents pour transférer les articles (17) triés de chaque goulotte d'accumulation (3) aux cages à rouleaux (4) associées.

14. Equipement selon la revendication 8, adapté pour mettre en oeuvre le procédé selon la revendication 7, **caractérisé en ce qu'**il comprend au moins deux goulottes d'accumulation (38a, 38b) superposées, le dispositif (35) étant adapté pour permettre auxdites deux goulottes d'accumulation (38a, 38b) superposées de transférer, à des intervalles de temps différents, les articles (17) triés à une cage à rouleaux (4) commune.

15. Equipement selon l'une quelconque des revendications 8 à 14, **caractérisé en ce qu'**il comprend des rouleaux d'emballage (5, 6) motorisés activement commandés, montés sur une cage à rouleaux (4), positionnés avec leur axe (9) orthogonal à la direction (19) de la trieuse, pouvant laisser tomber dans la cage à rouleaux, une courroie spéciale (7), afin de créer un fond intermédiaire temporaire (8) pour réduire le hauteur de chute pour les articles (17) triés, collecter les articles (17) triés et pour abaisser légèrement les articles (17) triés à l'intérieur de la cage à rouleaux (4), et ensuite retirer la courroie (7) du tas d'articles (17) triés afin de répéter un nouveau cycle avec l'ensemble suivant d'articles (17) triés jusqu'au remplissage complet de la cage à rouleaux (4), la largeur (21) de la courroie étant proche de la longueur (23) de la cage à rouleaux (4), la courroie (7) ayant une fenêtre ouverte (10) avec une longueur (25) plus longue que la largeur (24) de la cage à rouleaux et une largeur (22) proche de la largeur (21) de la courroie, due, à l'ouverture, uniquement à une bande étroite de courroie (7c, 7d) de chaque côté de la courroie (7) dans le sens de la largeur.

16. Equipement selon la revendication 8, **caractérisé en ce que** la structure de support (26) fait partie d'une structure fine articulée (13) qui peut être activement abaissée à l'intérieur d'une cage à rouleaux (4) vide et ensuite retirée par levage lorsque la cage à rouleaux (4) est pleine d'articles triés, la structure (13) est prévue avec des caractéristiques pour glisser facilement sur la paroi (27) de la cage à rouleaux lorsqu'elle est levée et avec une partie articulée (14) qui peut être ouverte lorsqu'elle est actionnée, par exemple par un coussin pneumatique (15) ou un autre moyen comme de petits actionneurs électriques ou des câbles transmettant des forces appliquées à distance par un moteur électrique par un levier tiré par une courroie à bande, afin de créer un fond intermédiaire temporaire (8) afin de réduire la hauteur de chute des articles triés ; la partie articulée est prévue avec un coussin (15) installé dans le bord avant qui, lorsqu'il est actionné par voie pneumatique ou par un actionneur électrique, amène la pression contre la paroi (28) de la cage à rouleaux à fixer fermement le fond intermédiaire (8) entre les parois (27, 28) de cage opposées ; la partie articulée (14) a une section transversale plus petite que la section transversale de la structure articulée (13), lorsqu'elle n'est pas activée, afin de provoquer une résistance minimum sur le levage de l'équipement lorsque la cage à rouleaux est pleine.

17. Procédé pour commander un équipement selon la revendication 16, **caractérisé en ce que** l'abaissement du fond intermédiaire (8) est commandé par un système de commande de trieuse en libérant la pression d'air du coussin pneumatique de levage (15) et **en ce que** le système de commande peut progressivement réduire le volume du coussin de levage (15), laissant plus d'espace disponible pour collecter les articles (17) triés.
